# FASCICULE DE BREVET EUROPEEN

(11) **EP 3 359 398 B1**
(45) Date de publication et mention de la délivrance du brevet: **04.09.2019**
(21) Numéro de dépôt: 16793945.3
(22) Date de dépôt: 06.10.2016
(51) Int. Cl.: B60C 1/00, C08L 9/06, C08L 7/00, C08L 9/00, C08L 57/02

(54) **PNEUMATIQUE POUR VEHICULE A USAGE AGRICOLE**
REIFEN FÜR EIN LANDWIRTSCHAFTLICHES FAHRZEUG
TIRE FOR AGRICULTURAL VEHICLE

(30) Priorité: 08.10.2015 FR 1559573
(43) Date de publication de la demande: 15.08.2018
(73) Titulaire: Compagnie Générale des Etablissements Michelin, 63000 Clermont-Ferrand (FR)
(72) Inventeur: MANGERET, Jean-Luc, 63040 CLERMONT-FERRAND Cedex 9 (FR); MONOD, Anthony, 63040 CLERMONT-FERRAND Cedex 9 (FR)
(74) Mandataire: Cohen, Sylvia
(86) Numéro de dépôt international: PCT/FR2016/052573
(87) Numéro de publication internationale: WO 2017/060633

(56) Documents cités:
- EP-A1- 1 074 403
- WO-A1-2014/095267
- JP-A- 2009 263 403

## Description

La présente invention concerne un pneumatique pour véhicule à usage agricole, tel qu'un tracteur agricole ou un véhicule agro-industriel.

La présente invention concerne plus particulièrement la bande de roulement d'un tel pneumatique, destinée à entrer à contact avec un sol par l'intermédiaire d'une surface de roulement.

Dans ce qui suit, les directions circonférentielle, axiale et radiale désignent respectivement une direction tangente à la surface de roulement du pneumatique et orientée selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Bien que non limitée à cette application, l'invention sera plus particulièrement décrite en référence à un engin agricole polyvalent, pouvant rouler aussi bien dans les champs que sur route, tel qu'un tracteur agricole.

Un pneumatique pour tracteur agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour tracteur agricole, et en particulier sa bande de roulement, doit présenter un compromis de performances entre la traction en champ, la résistance aux arrachements, la résistance à l'usure sur route, la résistance au roulement, le confort vibratoire sur route.
La bande de roulement d'un pneumatique pour tracteur agricole comprend généralement une pluralité de barrettes. Les barrettes sont des éléments en relief par rapport à une surface de fond qui est une surface de révolution autour de l'axe de rotation du pneumatique.

Une barrette a généralement une forme globalement parallélépipédique allongée, constituée d'au moins une portion rectiligne ou curviligne, et est séparée des barrettes adjacentes par des sillons. Une barrette peut être constituée d'une succession de portions rectilignes, telle que décrite dans les documents US3603370, US4383567, EP795427 ou avoir une forme curviligne, telle que présentée dans les documents US4446902, EP903249, EP1831034.

Selon la direction radiale, une barrette s'étend à partir de la surface de fond jusqu'à la surface de roulement, la distance radiale entre la surface de fond et la surface de roulement définissant la hauteur de barrette. La face radialement extérieure de la barrette, appartenant à la surface de roulement, qui entre en contact avec le sol, lors du passage de la barrette dans l'aire de contact du pneumatique, est appelée face de contact de la barrette.
Selon la direction axiale, une barrette s'étend vers l'intérieur, en direction du plan équatorial du pneumatique, à partir d'une face d'extrémité axialement extérieure jusqu'à une face d'extrémité axialement intérieure.
Selon la direction circonférentielle, une barrette s'étend, selon un sens de rotation préférentiel du pneumatique, à partir d'une face d'attaque jusqu'à une face de fuite. Par sens de rotation préférentiel, on entend le sens de rotation préconisé par le fabricant du pneumatique pour une utilisation optimale du pneumatique. A titre d'exemple, dans le cas d'une bande de roulement comprenant deux rangées de barrettes en V ou en chevrons, le pneumatique a un sens de rotation préférentiel selon la pointe des chevrons. La face d'attaque est, par définition, la face dont l'arête radialement extérieure ou arête d'attaque entre en premier en contact avec le sol, lors du passage de la barrette dans la surface de contact du pneumatique avec le sol, au cours de la rotation du pneumatique. La face de fuite est, par définition, la face dont l'arête radialement extérieure ou arête de fuite entre en dernier en contact avec le sol, lors du passage de la barrette dans la surface de contact du pneumatique avec le sol, au cours de la rotation du pneumatique. Selon le sens de rotation, la face d'attaque est dite en avant par rapport à la face de fuite.

Une barrette a usuellement, mais pas obligatoirement, un angle d'inclinaison moyen, par rapport à la direction circonférentielle, proche de 45°. En effet, cet angle d'inclinaison moyen permet en particulier un bon compromis entre la traction en champ et le confort vibratoire. La traction en champ est d'autant meilleure que la barrette est axiale, c'est-à-dire que son angle d'inclinaison moyen, par rapport à la direction circonférentielle est proche de 90°, alors que le confort vibratoire est d'autant meilleur que la barrette est circonférentielle, c'est-à-dire que son angle d'inclinaison moyen, par rapport à la direction circonférentielle, est proche de 0°. Il est notoire que la traction en champ est plus fortement déterminée par l'angle de la barrette au niveau de l'épaule, ce qui a amené certains concepteurs de pneumatiques à proposer une forme de barrette très incurvée, conduisant à une barrette sensiblement axiale à l'épaule et sensiblement circonférentielle au milieu de la bande de roulement.

La bande de roulement d'un pneumatique pour tracteur agricole comprend généralement deux rangées de barrettes telles que précédemment décrites. Cette distribution de barrettes inclinées par rapport à la direction circonférentielle confère à la bande de roulement une forme en V couramment dénommée motif en chevrons. Les deux rangées de barrettes présentent une symétrie par rapport au plan équatorial du pneumatique, avec le plus souvent un décalage circonférentiel entre les deux rangées de barrettes, résultant d'une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

La bande de roulement d'un pneumatique pour tracteur agricole comprend ainsi deux types d'éléments : les barrettes, qui sont les éléments en reliefs, et les sillons, qui sont les portions de la surface de fond séparant les barrettes. Ces deux types d'éléments sont sollicités de façon très différente. Les barrettes sont plus particulièrement sensibles à l'usure en usage routier et aux agressions par les cailloux en usage non routier ou en champ. Les sillons, entre les barrettes, sont principalement agressés par les chaumes résiduels après récolte, en usage en champ, et sont également sensibles aux agressions chimiques par l'ozone dans la mesure où ces sillons ne sont pas soumis à l'usure.

Les inventeurs se sont donnés pour objectif de concevoir une bande de roulement pour véhicule à usage agricole, plus performante du point de vue de la résistance aux agressions par les chaumes résiduels ou « stubble » en usage en champ.

La demanderesse a découvert de façon surprenante que l'utilisation d'un type de résine plastifiante spécifique dans des compositions pour bandes de roulement de pneumatique pour véhicule à usage agricole, permettait d'améliorer significativement les propriétés aux limites de ces compositions (déformation, contrainte à la rupture, déchirabilité), ce qui se traduit pour les pneumatiques ayant de telles bandes de roulement par une amélioration des propriétés de résistance aux agressions. L'obtention d'une telle amélioration est d'autant plus étonnante que généralement l'ajout de plastifiants dans ces compositions provoque une dégradation des propriétés mécaniques des compositions telle qu'en particulier les propriétés aux limites.

L'invention a donc pour objet un pneumatique pour véhicule à usage agricole comprenant une bande de roulement destinée à venir en contact avec un sol qui comprend une pluralité de barrettes séparées les unes des autres par des sillons, chaque barrette s'étendant radialement vers l'extérieur, sur une hauteur radiale H, à partir d'une surface de fond jusqu'à une face de contact, les sillons étant constitués par les portions de la surface de fond séparant les barrettes, caractérisé en ce que la bande de roulement comprend une composition de caoutchouc à base d'au moins un élastomère synthétique majoritaire en poids, cet élastomère synthétique comprenant au moins un copolymère de butadiène-styrène, SBR, le SBR ayant un taux supérieur ou égal à 20 parties pour cent parties d'élastomère, pce, une charge renforçante comprenant majoritairement du noir de carbone, caractérisé en ce que la composition comprend une résine plastifiante dicyclopentadiène aromatique comprenant essentiellement des motifs styrène, éthylène et dicyclopentadiène, avec un taux allant de 2 à 40 pce, la composition contenant moins de 5 pce d'un autre plastifiant

De préférence la pluralité de barrettes de la bande de roulement est répartie en une première rangée et une seconde rangée de barrettes globalement symétriques par rapport au plan équatorial du pneumatique, passant par le milieu de la bande roulement et perpendiculaire à l'axe de rotation du pneumatique.

Avantageusement, le noir de carbone a une surface spécifique CTAB supérieure ou égale à 80 m²/g.

Selon un mode de réalisation de l'invention, le SBR est utilisé en coupage avec au moins un autre élastomère diénique, en particulier choisi dans le groupe constitué par les polybutadiènes, les polyisoprènes synthétiques, le caoutchouc naturel, les copolymères de butadiène, les copolymères d'isoprène et les mélanges de ces élastomères et plus particulièrement avec du caoutchouc naturel ou du polyisoprène de synthèse.

De façon préférentielle, le noir de carbone présent dans la composition de caoutchouc représente plus de 60 % en masse du total de la charge renforçante, et plus préférentiellement encore plus de 90% en masse du total de la charge renforçante.

Avantageusement, la résine plastifiante dicyclopentadiène aromatique comprend au moins 90% en masse de motifs choisis parmi les motifs styrène, éthylène et dicyclopentadiène.

### I. MESURES ET TESTS UTILISES

Les compositions de caoutchouc sont caractérisées, après cuisson, comme indiqué ci-après.

### Essais de traction

Ces essais permettent de déterminer les contraintes d'élasticité et les propriétés à la rupture; ceux effectués sur les mélanges cuits sont réalisés conformément à la norme AFNOR-NF-T46-002 de septembre 1988.

On mesure à la température de 100°C ± 2°C, et dans les conditions normales d'hygrométrie (50 ± 5% d'humidité relative), selon la norme française NF T 40-101 (décembre 1979), les contraintes à la rupture (en MPa) et les allongements à la rupture (en %) sont également mesurés, l'énergie à la rupture (Energie Rupture) étant le produit de la contrainte à la rupture et de l'allongement à la rupture.

### Déchirabilité

Les indices de déchirabilité sont mesurés à 100°C. On détermine notamment la force à exercer pour obtenir la rupture (FRD, en N/mm) et on mesure la déformation à rupture (DRD, en %) sur une éprouvette de dimensions 10 x 85 x 2,5 mm entaillée au centre de sa longueur par 3 entailles sur une profondeur de 5 mm, pour provoquer la rupture de l'éprouvette. Ainsi on peut déterminer l'énergie pour provoquer la rupture (Energie) de l'éprouvette qui est le produit du FRD et DRD.

### II. DESCRIPTION DETAILLEE DE L'INVENTION

La présente invention concerne un pneumatique pour véhicule à usage agricole comprenant une bande de roulement destinée à venir en contact avec un sol qui comprend une pluralité de barrettes séparées les unes des autres par des sillons, chaque barrette s'étendant radialement vers l'extérieur, sur une hauteur radiale H, à partir d'une surface de fond jusqu'à une face de contact, les sillons étant constitués par les portions de la surface de fond séparant les barrettes, caractérisé en ce que la bande de roulement comprend une composition de caoutchouc à base d'au moins un élastomère synthétique majoritaire en poids, cet élastomère synthétique comprenant au moins un copolymère de butadiène-styrène, SBR, le SBR ayant un taux supérieur ou égal à 20 parties pour cent parties d'élastomère, pce, une charge renforçante comprenant majoritairement du noir de carbone, caractérisé en ce que la composition comprend une résine plastifiante dicyclopentadiène aromatique comprenant essentiellement des motifs styrène, éthylène et dicyclopentadiène, avec un taux allant de 2 à 40 pce, la composition contenant moins de 5 pce d'un autre plastifiant.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

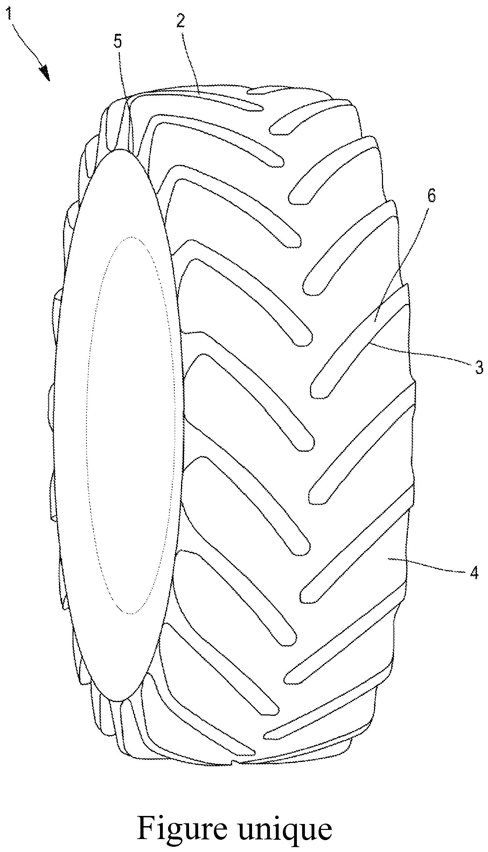

La présente invention sera mieux comprise à l'aide l'unique figure, schématique et non représentée à l'échelle, joints en annexe, représentant une vue en perspective d'un pneumatique 1 pour véhicule à usage agricole, tel qu'un tracteur.

Sur cette figure, le pneumatique 1 présente une bande de roulement 2, destinée à entrer en contact avec un sol par l'intermédiaire d'une surface de roulement, et qui comprend des barrettes 3 séparées les unes des autres par des sillons 4. Chaque barrette 3 s'étend radialement vers l'extérieur, à partir d'une surface de fond 5 jusqu'à une face de contact 6, positionnée dans la surface de roulement. Les sillons 4 sont constitués par les portions de la surface de fond 5 séparant les barrettes 3.

En particulier, dans le cas d'un pneumatique pour tracteur agricole tel que représenté sur la figure, la pluralité de barrettes (3) est répartie en une première rangée et une seconde rangée de barrettes globalement symétriques par rapport au plan équatorial du pneumatique, passant par le milieu de la bande roulement (2) et perpendiculaire à l'axe de rotation du pneumatique.

Cette bande de roulement conforme à l'invention est à base d'au moins un élastomère synthétique majoritaire en poids.

### Elastomère diénique

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

La matrice élastomérique de la composition conforme à l'invention comprend majoritairement un élastomère synthétique. Ce dernier comprend au moins un copolymère de butadiène-styrène, SBR, avec un taux supérieur ou égal à 20, de préférence avec un taux allant de 30 à 100 pce, plus préférentiellement de 40 à 100 pce.

Le SBR peut avantageusement être utilisé en coupage avec un ou plusieurs autres élastomères diéniques, notamment choisi dans le groupe constitué par les polybutadiènes, les polyisoprènes synthétiques, le caoutchouc naturel, les copolymères de butadiène, les copolymères d'isoprène, les copolymères de butadiène-styrène et les mélanges de ces élastomères.

En particulier le SBR peut être utilisé en coupage avec du caoutchouc naturel ou un polyisoprène de synthèse présent avec un taux allant de 5 à 40 pce, et préférentiellement allant de 15 à 40 pce.

Le SBR peut également être utilisé avantageusement en coupage avec du polybutadiène, BR, présent avec un taux allant de 5 à 40 pce et de préférence de 10 à 30 pce.

Selon un mode de réalisation préférentiel de l'invention, le SBR est utilisé en coupage avec du NR ou de l'IR dans les taux indiqués précédemment, et avec du BR également dans les taux indiqués précédemment.

Les élastomères précités peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752).
On peut aussi citer comme élastomères fonctionnels ceux préparés par l'utilisation d'un amorceur fonctionnel, notamment ceux portant une fonction amine ou étain (voir par exemple WO 2010072761).
Comme autres exemples d'élastomères fonctionnalisés, on peut citer également des élastomères (tels que SBR, BR, NR ou IR) du type époxydés.

Il est en particulier très avantageux, indépendamment de son coupage avec d'autres élastomères, d'utiliser un coupage de SBR avec un autre SBR de sorte à ce que la composition comprenne un SBR non fonctionnel et de SBR fonctionnel tels que décrit ci-dessus.

De préférence, le SBR fonctionnel est un SBR fonctionnalisé avec un agent de couplage, encore plus préférentiellement il s'agit d'un SBR couplé étain.

Egalement préférentiellement le SBR non fonctionnel est un SBR étoilé.

On notera que le SBR peut être préparé en émulsion ("ESBR") ou en solution ("SSBR»). Qu'il s'agisse de ESBR ou de SSBR, on utilise notamment un SBR ayant une teneur en styrène moyenne, par exemple comprise entre 10% et 35% en poids, ou une teneur en styrène élevée, par exemple de 35 à 55%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 65°C, de préférence supérieure ou égale à -50°C.

La composition selon l'invention peut contenir un ou plusieurs élastomères synthétiques autres que diénique, voire avec des polymères autres que des élastomères, par exemple des polymères thermoplastiques.

### Charge renforçante

Dans le présent exposé, La surface spécifique CTAB est déterminée selon la norme française NF T 45-007 de novembre 1987 (méthode B).

La composition de l'invention comporte au moins une charge renforçante comprenant majoritairement c'est-à-dire à un taux supérieur ou égal à 50 % en masse.
Parmi ces derniers, conviennent particulièrement les noirs de carbone ayant une surface spécifique CTAB supérieure ou égale à 90 m²/g, et de préférence inférieur ou égale à 140 m²/g.
On citera plus particulièrement les noirs de carbone renforçants des séries 100, 200 et 300 (grades ASTM), comme par exemple les noirs N115, N134, N234, N330.
Bien entendu, convient pour l'invention un coupage de deux noirs de carbones ayant les caractéristiques précités.

Peuvent également convenir des noirs ayant une structure dite « basse », c'est-à-dire ayant un indice COAN inférieur à 95ml/g.
On notera que l'indice d'absorption d'huile par des d'échantillons comprimés de noir de carbone (COAN) est une mesure de la capacité du noir de carbone à absorber des liquides. Cette propriété est elle-même fonction de la structure du noir de carbone. L'indice COAN est déterminé en utilisant la norme ISO 4656/2012 à l'aide d'un absorptiomètre, avec des d'échantillons comprimés de noir de carbone.

On notera que les noirs de carbone pourraient être par exemple déjà incorporés au SBR ou au NR le cas échéant, notamment isoprénique sous la forme d'un mélange maître, couramment appelé « masterbatch », réalisé par voie sèche ou liquide (voir par exemple demandes WO 97/36724 ou WO 99/16600).

Ce noir de carbone constitue avantageusement plus de 60 % en masse de la charge renforçante totale, de préférence plus de 70 % et de façon encore plus préférentielle 90% en masse de la charge renforçante totale de la composition.
Le noir de carbone peut avantageusement représenter la seule charge renforçante de la composition.

Selon une variante de réalisation de l'invention, le noir de carbone ayant la surface spécifique CTAB précitée peut être utilisé en coupage avec une autre charge renforçante minoritaire dans un taux compris préférentiellement entre 1 et 10 pce. Cette autre charge renforçante peut être constituée par tout type de charge dite renforçante, connue pour ses capacités à renforcer une composition de caoutchouc utilisable pour la fabrication de pneumatiques.

Par exemple une autre charge organique telle qu'un autre noir de carbone, des charges organiques de polyvinylaromatique fonctionnalisé telles que décrites dans les demandes WO-A-2006/069792 et WO-A-2006/069793, une charge inorganique renforçante telle que de la silice à laquelle est associé de manière connue un agent de couplage, ou encore un mélange de ces différentes charges.

Ainsi par "charge inorganique", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("non-black filler") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (□OH), à sa surface, nécessitant pour être utilisée à titre de charge renforçante l'emploi d'un agent ou système de couplage destiné à assurer une liaison chimique stable entre l'élastomère isoprénique et ladite charge.
Une telle charge inorganique peut donc être utilisée avec un agent de couplage pour permettre le renforcement de la composition de caoutchouc dans laquelle elle est comprise. Elle peut également être utilisée avec un agent de recouvrement (qui n'assure pas de liaison entre la charge et la matrice élastomérique) en complément d'un agent de couplage ou non (dans ce cas la charge inorganique ne joue pas de rôle de renforcement).

L'état physique sous lequel se présente la charge inorganique est indifférent, que ce soit sous forme de poudre, de microperles, de granulés, de billes ou toute autre forme densifiée appropriée. Bien entendu on entend également par charge inorganique des mélanges de différentes charges inorganiques, en particulier de charges siliceuses et/ou alumineuses hautement dispersibles telles que décrites ci-après.

Comme charges inorganiques conviennent notamment des charges minérales du type siliceuse, en particulier de la silice (SiO2), ou du type alumineuse, en particulier de l'alumine (Al2O3). La silice utilisée peut être toute silice connue de l'homme du métier, notamment toute silice précipitée ou pyrogénée présentant une surface BET ainsi qu'une surface spécifique CTAB toutes deux inférieures à 450 m²/g, de préférence de 30 à 400 m2/g. A titres de silices précipitées hautement dispersibles (dites "HDS"), on citera par exemple les silices « Ultrasil 7000 » et « Ultrasil 7005 » de la société Evonik, les silices «Zeosil 1165MP, 1135MP et 1115MP» de la société Rhodia, la silice «Hi-Sil EZ150G » de la société PPG, les silices « Zeopol 8715, 8745 et 8755 » de la Société Huber, les silices à haute surface spécifique telles que décrites dans la demande WO 03/16837.
La surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17).

On peut également envisager l'ajout au noir de carbone spécifique de la composition, d'autres charges minoritairement, de préférence avec un taux inférieur ou égal à 10 pce, telles que des noirs de carbone partiellement ou intégralement recouverts de silice par un post traitement, ou les noirs de carbone modifiés in situ par de la silice tels que, à titre non limitatif, les charges qui commercialisées par la société Cabot Corporation sous la dénomination EcoblackTM « CRX 2000 » ou « CRX4000 ».

De manière préférentielle, le taux de charge totale (noir de carbone et autres charges le cas échéant) est compris entre 20 et 150 pce et plus préférentiellement entre 20 et 100 pce.
Le noir de carbone selon l'invention est présent avec un taux variant de 20 à 90 pce, plus préférentiellement de 30 à 80 pce et encore plus préférentiellement de 45 à 65 pce.

### Résine plastifiante

De manière connue de l'homme du métier, la dénomination "résine plastifiante" est réservée dans la présente demande, par définition, à un composé qui est d'une part solide à température ambiante (23°C) (par opposition à un composé plastifiant liquide tel qu'une huile).

Les résines hydrocarbonées sont des polymères bien connus de l'homme du métier, miscibles par nature dans les compositions d'élastomère(s) diénique(s) lorsqu'elles sont qualifiées en outre de "plastifiantes". Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

La température de transition vitreuse Tg est mesurée de manière connue par DSC (*Differential Scanning Calorimetry*), selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Il est connu d'utiliser dans des compositions de caoutchouc pour pneumatiques des résines plastifiantes hydrocarbonées ayant au moins une quelconque des caractéristiques suivantes :
- une Tg supérieure à 20°C, plus préférentiellement supérieure à 30°C ;
- une masse moléculaire moyenne en nombre (Mn) comprise entre 400 et 2000 g/mol,
- un indice de polymolécularité (Ip) inférieur à 4, préférentiellement inférieur à 3 (rappel : Ip = Mw/Mn avec Mw masse moléculaire moyenne en poids).

Plus préférentiellement, cette résine plastifiante hydrocarbonée présente l'ensemble des caractéristiques préférentielles ci-dessus.

Et en particulier, il est connu de choisir ces résines plastifiantes parmi le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

La demanderesse a découvert que parmi ces résines plastifiantes dicyclopentadiènes aromatiques, les résines dicyclopentadiènes comprenant essentiellement des motifs styrène, éthylène et dicyclopentadiène, utilisées dans des compositions à base majoritairement d'élastomères synthétiques et de noir de, permettaient de façon étonnante de permettre l'obtention de propriétés améliorées.
On entend par « essentiellement », le fait que les résines comprennent au moins 80% de motifs choisis parmi les motifs styrène, éthylène et dicyclopentadiène.

Plus préférentiellement encore les résines plastifiantes dicyclopentadiènes aromatiques convenant pour l'invention comprennent au moins 90% de motifs choisis parmi les motifs styrène, éthylène et dicyclopentadiène.

A titre d'exemples de résines conformes à l'invention, des résines plastifiantes dicyclopentadiènes aromatiques ayant un taux de motifs dicyclopentadiène compris entre 10 et 30% telles que notamment des résines commerciales «Novares TC160» (Mn=710g/mol ; Mw=2000g/mol ; Ip=2,8, Tg=106°C), «Novares TC100» (Mn=460g/mol ; Mw=840g/mol ; Ip=1,8, Tg=42°C) commercialisées par la société Rütgers, les résines « QUINTONE » commercialisées par la société Nippon Zeon, les résines « LX1200-130 » ou « NEVROZ1420 » commercialisée par la société Neville.

Le taux de résine dicyclopentadiène aromatique va préférentiellement de 2 à 40 pce. Préférentiellement le taux de résine dicyclopentadiène aromatique va de 2 à 20 pce lorsque la composition de caoutchouc comprend un taux de noir de carbone conforme à l'invention, inférieur ou égal à 65 pce, plus préférentiellement le taux de résine plastifiante va de 2 à 10 pce, et encore plus préférentiellement de 3 à 7 pce.
En dessous du minimum indiqué, l'effet technique visé peut s'avérer insuffisant, alors qu'au-delà de la limite supérieure, le compromis de propriétés visé pour la composition de caoutchouc considérée n'est plus atteint.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

### Additifs divers

Les compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des agents de protection tels que cires anti-ozone, anti-ozonants chimiques, anti-oxydants, des agents anti-fatigue, des résines tackifiantes, des agents de mise en oeuvre tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

Cependant la composition de caoutchouc conforme à l'invention ne peut comprendre un plastifiant autre que la résine plastifiante dicyclopentadiène aromatique, qu'avec un taux de moins de 5 pce, de préférence moins de 2 pce, préférentiellement moins de 1pce.

Encore plus préférentiellement, la composition de caoutchouc conforme à l'invention est dépourvue de plastifiant autre que la résine plastifiante dicyclopentadiène aromatique.

A la charge renforçante précédemment décrite, peuvent être également ajoutés, en fonction de l'application visée, des charges inertes (i.e., non renforçantes) telles que particules d'argile, bentonite, talc, craie, kaolin avec un taux inférieur ou égal à 10 pce et préférentiellement inférieur ou égal à 5 pce.

### Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

### III- EXEMPLES DE REALISATION DE L'INVENTION

Les exemples qui suivent permettent d'illustrer l'invention, cette dernière ne saurait cependant être limitée à ces seuls exemples.

### III-1 Préparation des compositions de caoutchouc.

On procède pour les essais qui suivent de la manière suivante: on introduit dans un mélangeur interne, rempli à 70% et dont la température initiale de cuve est d'environ 90°C, le SBR, le noir de carbone puis, après une à deux minutes de malaxage, les divers autres ingrédients, et notamment la résine plastifiante le cas échéant, à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) de caoutchouc pour la mesure de leurs propriétés physiques ou mécaniques.

### III-2 Essai

Cet essai a pour but de démontrer les propriétés améliorées de compositions de caoutchouc pour bande de roulement de pneumatique agricole conformes à l'invention comparées à des compositions non conformes dépourvues de résines dicyclopentadiènes aromatiques.

On compare pour cela 6 compositions à base d'un coupage E comprenant 35 pce de SBR non fonctionnel, 35 pce de SBR fonctionnel (couplé étain) et 35 pce de NR, ou d'un coupage F comprenant 45 pce de SBR non fonctionnel, 35 pce de NR et 20 pce de BR, renforcées par du noir de carbone seul ou un coupage de noir de carbone et de silice, ces compositions différant les unes des autres essentiellement par les caractéristiques techniques qui suivent :
- la composition T1 est une composition témoin, à base d'un coupage E, comportant uniquement du noir de carbone et ne comportant pas de résine plastifiante dicyclopentadiène aromatique,
- la composition T2 est une deuxième composition témoin, à base d'un coupage E, comportant un coupage de noir de carbone et de silice, mais ne comportant pas de résine plastifiante dicyclopentadiène aromatique,
- la composition T3 est une troisième composition témoin, à base d'un coupage F, comportant uniquement du noir de carbone et ne comportant pas de résine plastifiante dicyclopentadiène aromatique,
- la composition C1 conforme à l'invention, à base d'un mélange E, comprend du noir de carbone et une résine plastifiante dicyclopentadiène aromatique,
- la composition C2 conforme à l'invention, à base d'un mélange E, comprend un coupage de noir de carbone et de silice, et une résine plastifiante dicyclopentadiène aromatique,
- la composition C3 conforme à l'invention, à base d'un mélange F, comprend du noir de carbone et une résine plastifiante dicyclopentadiène aromatique.

Les tableaux 1 et 2 donnent la formulation des différentes compositions (tableau 1 - taux des différents produits exprimés en pce) ainsi que leurs propriétés après cuisson, environ 40 min à 150°C (tableau 2); le système de vulcanisation est constitué par soufre et sulfénamide.

Au vu du tableau 2, il apparaît de façon étonnante que les compositions conformes à l'invention C1, C2 et C3 permettent une amélioration très significative par rapport aux compositions T1, T2 et T3 respectivement, de l'Energie Rupture (à la fois de l'allongement à la rupture que de la contrainte à la rupture) mais également des propriétés de déchirabilité (valeurs de DRD et de FRD).
Or cette constatation est vraie à la fois pour des matrices élastomériques différentes (compositions T1, C1, T2 et C2 avec SBR/NR 65/35 et compositions T3 etC3avec SBR//NR/BR 45/35/20), et pour des coupages et natures de charge différentes (compositions T1, C1, T3 et C3 avec du noir N234 seul, les compositions T2 et C2 avec un coupage N115/Si).

Ainsi ces exemples montrent que l'utilisation de résine plastifiante dicyclopentadiène aromatique dans des compositions de caoutchouc à base majoritairement d'élastomères synthétique et de noir de carbone, ne comportant pas ou très peu d'autres plastifiants, pour bande de roulement de pneumatiques pour véhicules à usage agricole, permet d'améliorer de façon significative et surprenante les propriétés aux limites de ces compositions et donc la résistance à l'agression de tels pneumatiques.

**Tableau 1**

| **Compositions** | **T1** | **T2** | **T3** | **C1** | **C2** | **C3** |
|---|---|---|---|---|---|---|
| SBR (1) | 35 | 35 | 45 | 35 | 35 | 45 |
| SBR (2) | 30 | 30 | - | 30 | 30 | - |
| NR (3) | 35 | 35 | 35 | 35 | 35 | 35 |
| BR (4) | - | - | 20 | - | - | 20 |
| Noir de carbone (5) | 50 | - | 50 | 50 | - | 50 |
| Noir de carbone (6) | - | 50 | - | - | 50 | - |
| Silice (7) | - | 5 | - | - | 5 | - |
| Résine plastifiante (8) | - | - | - | 3 | 3 | - |
| Résine plastifiante (9) | - | - | - | - | - | 4 |
| Anti-oxydant (10) | 1,5 | 1,5 | 1,5 | 1,5 | 1,5 | 1,5 |
| Oxyde de Zinc (11) | 2,5 | 2,5 | 2,5 | 2,5 | 2,5 | 2,5 |
| Acide stéarique (12) | 2 | 2 | 2 | 2 | 2 | 2 |
| Soufre | 1,4 | 1,4 | 1,4 | 1,4 | 1,4 | 1,4 |
| Accélérateur (13) | 0,7 | 0,7 | 0,7 | 0,7 | 0,7 | 0,7 |

| | | | | | | |
|---|---|---|---|---|---|---|
| (1) SSBR non étendu, avec 26,5% de styrène, 24% de motifs polybutadiène 1-2 et 50% de motifs polybutadiène 1-4 trans (Tg = -48°C) ; (2) SSBR couplé Etain, non étendu, avec 15,5% de styrène, 24% de motifs polybutadiène 1-2 et 48% de motifs polybutadiène 1-4 trans (Tg = -65°C) (3) Caoutchouc naturel (4) BR Nd avec 0,5% de 1-2 ; 1,2% de trans ; 98,3% de cis 1-4 (Tg = -108°C) ; (5) N234 commercialisé par la société Cabot Corporation; (6) N115 commercialisé par la société Cabot Corporation (7) Silice « Ultrasil 7000 » commercialisée par la société Evonik ; (8) résine « Novares TC100 » (Mn=460g/mol ; Mw=840g/mol ; Ip=1,8, Tg=42°C) commercialisée par la société Rütgers; (9) résine «Novares TC160» (Mn=710g/mol ; Mw=2000g/mol ; Ip=2,8, Tg=106°C) commercialisée par la société Rütgers; (10)N-1,3-diméthylbutyl-N-phényl-para-phénylènediamine ("Santoflex 6-PPD" de la société Flexsys) ; (11) oxyde de zinc (grade industriel - société Umicore) ; (12) stéarine ("Pristerene 4931" - société Uniqema) ; (13) N-cyclohexyl-2-benzothiazyl-sulfénamide ("Santocure CBS" de la société Flexsys). | | | | | | |

**Tableau 2**

| **Compositions** | **T1** | **T2** | **T3** | **C1** | **C2** | **C3** |
|---|---|---|---|---|---|---|
| Allongement rupture (%) | 532 | 576 | 493 | 692 | 636 | 610 |
| Contrainte rupture (MPa) | 14,9 | 14,8 | 13,8 | 15,2 | 15,3 | 13,9 |
| Energie rupture (MJ) | 79,45 | 85,19 | 68,09 | 105,31 | 97,37 | 84,73 |
| DRD (%) | 181 | 204 | 160 | 236 | 239 | 241 |
| FRD (N/mm) | 27,5 | 29,1 | 24,0 | 31,4 | 30,7 | 30,5 |

## Revendications

1. Pneumatique (1) pour véhicule à usage agricole comprenant une bande de roulement (2) destinée à venir en contact avec un sol qui comprend une pluralité de barrettes (3) séparées les unes des autres par des sillons (4), chaque barrette (3) s'étendant radialement vers l'extérieur, sur une hauteur radiale H, à partir d'une surface de fond (5) jusqu'à une face de contact (6), les sillons (4) étant constitués par les portions de la surface de fond (5) séparant les barrettes (3), **caractérisé en ce que** la bande de roulement comprend une composition de caoutchouc à base d'au moins un élastomère synthétique majoritaire en poids, cet élastomère synthétique comprenant au moins un copolymère de butadiène-styrène, SBR, le SBR ayant un taux supérieur ou égal à 20 parties pour cent parties d'élastomère, pce, une charge renforçante comprenant majoritairement du noir de carbone, **caractérisé en ce que** la composition comprend une résine plastifiante dicyclopentadiène aromatique comprenant essentiellement des motifs styrène, éthylène et dicyclopentadiène, avec un taux allant de 2 à 40 pce, la composition contenant moins de 5 pce d'un autre plastifiant.

2. Pneumatique selon la revendication 1, dans lequel la pluralité de barrettes (3) de la bande de roulement est répartie en une première rangée et une seconde rangée de barrettes globalement symétriques par rapport au plan équatorial du pneumatique, passant par le milieu de la bande roulement (2) et perpendiculaire à l'axe de rotation du pneumatique.

3. Pneumatique selon l'une quelconque des revendications 1 ou 2, dans lequel le noir de carbone a une surface spécifique CTAB supérieure ou égale à 80 m²/g.

4. Pneumatique selon l'une quelconque des revendications précédentes, dans lequel le taux de SBR va de 40 à 100 pce.

5. Pneumatique selon l'une quelconque des revendications précédentes, dans lequel le SBR est utilisé en coupage avec au moins un autre élastomère diénique choisi dans le groupe constitué par les polybutadiènes, les polyisoprènes synthétiques, le caoutchouc naturel, les copolymères de butadiène, les copolymères d'isoprène, les copolymères de butadiène-styrène et les mélanges de ces élastomères.

6. Pneumatique selon la revendication 5, dans lequel le SBR est utilisé en coupage avec un autre SBR de sorte à ce que la composition comprenne un SBR fonctionnel et un SBR non fonctionnel.

7. Pneumatique selon la revendication 6, dans lequel le SBR fonctionnel est un SBR fonctionnalisé avec un agent de couplage, de préférence couplé étain.

8. Pneumatique selon l'une quelconque des revendications 6 ou 7, dans lequel le SBR non fonctionnel est un SBR étoilé.

9. Pneumatique selon l'une quelconque des revendications 6 à 8, dans lequel le SBR est utilisé en coupage avec du caoutchouc naturel ou du polyisoprène de synthèse présent avec un taux allant de 5 à 40 pce, de préférence avec un taux allant de 15 à 40 pce.

10. Pneumatique selon l'une quelconque des revendications 5 à 9, dans lequel le SBR est utilisé en coupage avec du polybutadiène présent avec un taux allant de 5 à 40 pce, de préférence avec un taux allant de 10 à 30 pce.

11. Pneumatique selon l'une quelconque des revendications précédentes, dans lequel le noir de carbone représente plus de 60 % en masse du total de la charge renforçante.

12. Pneumatique selon l'une quelconque des revendications 1 à 11, dans lequel la charge renforçante comprend également une charge inorganique, préférentiellement de la silice.

13. Pneumatique selon l'une quelconque des revendications précédentes, dans lequel la résine plastifiante dicyclopentadiène aromatique comprend au moins 90% en masse de motifs choisis parmi les motifs styrène, éthylène et dicyclopentadiène.

14. Pneumatique selon l'une quelconque des revendications précédentes, dans lequel la composition est dépourvue de plastifiant autre que la résine plastifiante dicyclopentadiène aromatique.

15. Pneumatique selon l'une quelconque des revendications précédentes, dans lequel le taux de noir de carbone est inférieur ou égal à 65 pce et le taux de résine dicyclopentadiène aromatique va de 2 à 20 pce, de préférence de 2 à 10 pce.

## Patentansprüche

1. Reifen (1) für ein Fahrzeug zum landwirtschaftlichen Gebrauch, umfassend eine Lauffläche (2), die dazu bestimmt ist, mit einem Boden in Kontakt zu treten, und die mehrere Streifen (3) umfasst, die durch Rillen (4) voneinander getrennt sind, wobei sich jeder Streifen (3) über eine radiale Höhe H von einer Grundfläche (5) zu einer Kontaktfläche (6) radial nach außen erstreckt, wobei die Rillen (4) durch die Abschnitte der Grundfläche (5) ausgebildet sind, die die Streifen (3) trennen, **dadurch gekennzeichnet, dass** die Lauffläche eine Kautschukzusammensetzung auf der Basis von zumindest einem synthetischen Elastomer als Hauptgewichtsanteil umfasst, wobei dieses synthetische Elastomere zumindest ein Butadien-Styrol-Copolymer, SBR, umfasst, wobei das SBR einen Anteil von 20 Teilen pro Hundert Teile Elastomer, pce, oder mehr aufweist, wobei ein verstärkender Füllstoff überwiegend Ruß umfasst, **dadurch gekennzeichnet, dass** die Zusammensetzung ein weichmachendes aromatisches Dicyclopentadien-Harz umfasst, das im Wesentlichen Styrol-, Ethylen- und Dicyclopentadienenheiten mit einem Anteil von 2 bis 40 pce umfasst, wobei die Zusammensetzung zumindest 5 pce eines anderen Weichmachers enthält.

2. Reifen nach Anspruch 1, wobei die mehreren Streifen (3) der Lauffläche in eine erste Reihe und eine zweite Reihe von Streifen unterteilt sind, die im Allgemeinen symmetrisch in Bezug auf die Äquatorialebene des Reifens sind und durch die Mitte der Lauffläche (2) und senkrecht zur Drehachse des Reifens verlaufen.

3. Reifen nach einem der Ansprüche 1 oder 2, wobei der Ruß eine spezifische CTAB-Oberfläche von 80 m²/g oder mehr aufweist.

4. Reifen nach einem der vorangehenden Ansprüche, wobei sich der SBR-Anteil auf 40 bis 100 pce beläuft.

5. Reifen nach einem der vorangehenden Ansprüche, wobei das SBR im Verschnitt mit zumindest einem anderen Dien-Elastomer verwendet wird, das aus der Gruppe, bestehend aus Polybutadienen, synthetischen Polyisoprenen, Naturkautschuk, Butadien-Copolymeren, Butadien-Styrol-Copolymeren und Gemischen dieser Elastomere, ausgewählt ist.

6. Reifen nach Anspruch 5, wobei das SBR im Verschnitt mit einem anderen SBR verwendet wird, sodass die Zusammensetzung ein funktionelles SBR und ein nicht funktionelles SBR umfasst.

7. Reifen nach Anspruch 6, wobei das funktionelle SBR mit einem SBR Kupplungsmittel funktionalisiert ist, vorzugsweise mit Zinn gekoppelt.

8. Reifen nach einem der Ansprüche 6 oder 7, wobei das nicht funktionelle SBR ein sternförmiges SBR ist.

9. Reifen nach einem der Ansprüche 6 bis 8, wobei das SBR im Verschnitt mit Naturkautschuk oder synthetischem Polyisopren mit einem Anteil von 5 bis 40 pce, vorzugsweise mit einem Anteil von 15 bis 40 pce, verwendet wird.

10. Reifen nach einem der Ansprüche 5 bis 9, wobei das SBR im Verschnitt mit Polybutadien mit einem Anteil von 5 bis 40 pce, vorzugsweise mit einem Anteil von 10 bis 30 pce, verwendet wird.

11. Reifen nach einem der vorangehenden Ansprüche, wobei der Ruß mehr als 60 Gew.-% bezogen auf das Gesamtgewicht des verstärkenden Füllstoffs ausmacht.

12. Reifen nach einem der Ansprüche 1 bis 11, wobei der verstärkende Füllstoff außerdem einen anorganischen Füllstoff, vorzugsweise Siliciumdioxid, umfasst.

13. Reifen nach einem der vorangehenden Ansprüche, wobei das weichmachende aromatische Dicyclopentadien-Harz zumindest 90 Gew.-% Füllstoffe, ausgewählt aus den Füllstoffen Styrol, Ethylen und Dicyclopentadien, umfasst.

14. Reifen nach einem der vorangehenden Ansprüche, wobei die Zusammensetzung keinen anderen Weichmacher als das weichmachende aromatische Dicyclopentadien-Harz umfasst.

15. Reifen nach einem der vorangehenden Ansprüche, wobei der Anteil an Ruß 65 pce oder weniger beträgt und der Anteil an aromatischem Dicyclopentadien-Harz 2 bis 20 pce, vorzugsweise 2 bis 10 pce, beträgt.

## Claims

1. Tyre (1) for a vehicle for agricultural use comprising a tread (2) intended to come into contact with the ground which comprises a plurality of lugs (3) separated from one another by grooves (4), each lug (3) extending radially outwards, over a radial height H, from a bottom surface (5) as far as a contact face (6), the grooves (4) being made up of the portions of the bottom surface (5) that separate the lugs (3), **characterized in that** the tread comprises a rubber composition based on at least one synthetic elastomer which predominates by weight, this synthetic elastomer comprising at least one butadienestyrene copolymer, SBR, the SBR having a content greater than or equal to 20 parts per hundred rubber, phr, a reinforcing filler predominantly comprising carbon black, **characterized in that** the composition comprises an aromatic dicyclopentadiene plasticizing resin essentially comprising styrene, ethylene and dicyclopentadiene units, at a content ranging from 2 to 40 phr, the composition containing under 5 phr of another plasticizer.

2. Tyre according to Claim 1, in which the plurality of lugs (3) of the tread is distributed between a first row and a second row of lugs which on the whole are symmetrical with respect to the equatorial plane of the tyre, which passes through the middle of the tread (2) and is perpendicular to the axis of rotation of the tyre.

3. Tyre according to either one of Claims 1 and 2, in which the carbon black has a CTAB specific surface area greater than or equal to 80 m²/g.

4. Tyre according to any one of the preceding claims, in which the SBR content ranges from 40 to 100 phr.

5. Tyre according to any one of the preceding claims, in which the SBR is used in a blend with at least one other diene elastomer selected from the group consisting of polybutadienes, synthetic polyisoprenes, natural rubber, butadiene copolymers, isoprene copolymers, butadiene - styrene copolymers and the mixtures of these elastomers.

6. Tyre according to Claim 5, in which the SBR is used as a blend with another SBR so that the composition contains a non-functional SBR and a functional SBR.

7. Tyre according to Claim 6, in which the functional SBR is an SBR that has been functionalized with a coupling agent, preferably a tin-coupled SBR.

8. Tyre according to either one of Claims 6 and 7, in which the non-functional SBR is a star-branched SBR.

9. Tyre according to any one of Claims 6 to 8, in which the SBR is used in a blend with natural rubber or synthetic polyisoprene, present at a content ranging from 5 to 40 phr, preferably at a content ranging from 15 to 40 phr.

10. Tyre according to any one of Claims 5 to 9, in which the SBR is used in a blend with polybutadiene, present at a content ranging from 5 to 40 phr, preferably at a content ranging from 10 to 30 phr.

11. Tyre according to any one of the preceding claims, in which the carbon black represents more than 60% by weight of the sum total of reinforcing filler.

12. Tyre according to any one of Claims 1 to 11, in which the reinforcing filler also comprises an inorganic filler, preferably silica.

13. Tyre according to any one of the preceding claims, in which the aromatic dicyclopentadiene plasticizing resin comprises at least 90% by weight of units selected from styrene, ethylene and dicyclopentadiene units.

14. Tyre according to any one of the preceding claims, in which the composition is devoid of plasticizer other than the aromatic dicyclopentadiene plasticizing resin.

15. Tyre according to any one of the preceding claims, in which the content of carbon black is less than or equal to 65 phr, and the content of aromatic dicyclopentadiene resin ranges from 2 to 20 phr, preferably from 2 to 10 phr.
